# FASCICULE DE BREVET EUROPEEN

(11) **EP 2 922 600 B1**
(45) Date de publication et mention de la délivrance du brevet: **22.05.2019**
(21) Numéro de dépôt: 13808091.6
(22) Date de dépôt: 21.11.2013
(51) Int. Cl.: A63B 69/12, A63B 31/10, A63B 69/14, G09B 19/00

(54) **ACCESSOIRE D'AIDE A LA NAGE, NOTAMMENT UNE NAGE NECESSITANT UN MOUVEMENT ONDULATOIRE**
SCHWIMMHILFEZUBEHÖR, INSBESONDERE ZUR DURCHFÜHRUNG EINER WELLENFÖRMIGEN SCHWIMMBEWEGUNG
SWIMMING ASSISTANCE ACCESSORY, ESPECIALLY FOR PERFORMING A STROKE REQUIRING AN UNDULATORY MOVEMENT

(30) Priorité: 21.11.2012 FR 1261087
(43) Date de publication de la demande: 30.09.2015
(73) Titulaire: Clisson, Laurent, 92340 Bourg-la-Reine (FR)
(72) Inventeur: Clisson, Laurent, 92340 Bourg-la-Reine (FR)
(74) Mandataire: Cabinet Camus Lebkiri
(86) Numéro de dépôt international: PCT/FR2013/052819
(87) Numéro de publication internationale: WO 2014/080133

(56) Documents cités:
- FR-A1- 2 940 762
- GB-A- 2 480 368
- US-A- 3 373 991
- US-A- 5 980 259

## Description

### DOMAINE

Le domaine de l'invention concerne les dispositifs d'aide à la nage pour la natation. En particulier, l'invention se rapporte aux équipements permettant l'apprentissage ou le perfectionnement d'une nage simultanée ondulatoire telle que le papillon le dauphin ou la brasse. Le domaine de l'invention concerne également les accessoires d'aide à la nage pour les nageurs plus expérimentés à la recherche d'un accessoire pour se stabiliser à une profondeur afin d'éviter la résistance de « la traînée de vague ».

### ETAT DE L'ART

Il existe de nombreux accessoires d'aide à la nage que l'on trouve communément dans les piscines ou au bord de la mer.

Parmi ces accessoires, on trouve la planche de nage de piscine, appelée également Kickboard, qui permet d'aider un nageur en lui offrant une stabilité de la partie supérieure de son corps. Cet accessoire permet au nageur de se focaliser sur la partie inférieure de son corps de manière à progresser localement. Ainsi le nageur peut apprendre à battre des pieds ou à effectuer les mouvements de grenouille selon la nage pratiquée sans se soucier de la partie supérieure de son corps.

Il existe par ailleurs, des bouées adaptées à la forme intérieure des jambes, également appelées Pull-Buoy, de telle sorte que le nageur doit les serrer pour le maintenir en contact. Généralement, elles ont une forme de « 8 » permettant une bonne tenue entre les jambes. Cet accessoire permet contrairement au précédent de concentrer les efforts de nage sur la partie supérieure du corps. Une autre alternative est réalisée par l'assemblage de deux cylindres réunis par une sangle.

Un troisième équipement, appelé Pull Kick, est une planche ayant une forme en « 8 ». Cette planche est destinée à être insérée entre les jambes et permet un meilleur maintien entre les jambes. Plus rigide que la planche "classique", elle permet également une glissée sous-marine au départ des séries et aux virages.

Le document GB2480368 décrit un quatrième équipement permettant de mesurer la performance d'un nageur en fonction de l'immersion de la planche.

Le document US-A-5980259 décrit un mannequin, pour la pratique et l'entraînement au sauvetage en mer. Dans une logique d'apprentissage d'une nage, un accessoire peut être utilisé afin de concentrer l'attention et les efforts de la nage sur une partie en particulier. Cet apprentissage nécessite de contraindre les mouvements d'une partie du corps en lui offrant un gain de stabilité à l'encontre du mouvement crée lors de la nage par la partie non bloquée du corps.

Par ailleurs, Il existe des accessoires d'aide à la nage qui ne visent pas à bloquer un mouvement d'une partie du corps. C'est le cas des palmes, des plaquettes ou des paddles qui permettent de concentrer les efforts sur la partie inférieure du corps de manière à en décupler les sensations au nageur. Ainsi le nageur peut apprendre à battre des pieds/jambes selon une échelle plus importante de sensations de battements. Cet accessoire est utile à l'apprentissage d'une nage telle que le crawl mais comporte la particularité d'amplifier les mouvements d'une partie du corps. De ce fait, il contribue à créer une dissymétrie de répartition des efforts, ce qui est l'effet recherché.

En revanche, il n'existe pas d'accessoire d'aide à une nage basée sur l'ondulation du corps du nageur telle que le papillon qui fait intervenir un mouvement ondulatoire du corps.

Les accessoires d'aide à la nage de la brasse permettent de travailler localement un geste. En revanche, aucun n'accessoire ne permet l'amélioration du mouvement ondulatoire nécessaire à créer une force motrice et accompagnant les efforts du nageur.

Les accessoires tels que décrits précédemment ont pour conséquence de contraindre la propagation de l'ondulation du corps notamment pour offrir un gain de stabilité.

Les accessoires décrits précédemment semblent donc incompatibles pour un nageur souhaitant améliorer l'ondulation du corps dans l'eau. Or cette dernière est un paramètre essentiel à maitriser lors de l'apprentissage du papillon par exemple.

### RESUME DE L'INVENTION

L'invention permet de résoudre les inconvénients précités par les caractéristiques des revendications 1 et 17.

L'invention permet d'offrir un accessoire permettant l'apprentissage des nages basées sur une ondulation du corps du nageur. Elle permet également d'offrir un élément de stabilité et de guidage sans toutefois stopper l'ondulation du corps. Elle permet d'améliorer les sensations d'ondulation.

L'objet de l'invention concerne un accessoire d'aide à la nage comprenant :
- des moyens de maintien de l'accessoire lors de la nage ;
- un flotteur permettant à l'eau d'exercer sur l'accessoire une force verticale résultante de la poussée d'Archimède opposée à la gravité ;
- un lest permettant de maintenir le barycentre des moyens de maintien sensiblement en dessous de la surface de l'eau lorsque l'accessoire est dans une position d'équilibre dans l'eau.

L'accessoire permet de :
- bien ressentir l'importance des ondulations, la synchronisation et la fluidité du mouvement de la nage ondulée ;
- sentir le rythme, la souplesse et le relâchement ;
- sentir une nage avec tout le corps qui doit onduler, plutôt qu'avancer en force avec les bras et des jambes ;
- rester en coulée plus longtemps en limitant les pertes d'énergie causées par les mouvements des bras ;
- évoluer sous l'eau pour limiter au maximum les résistances hydrodynamiques comme la traînée de vague.

Selon un mode de réalisation amélioré, le centre de gravité du lest et le barycentre des moyens de maintien sont sensiblement proches. Ils peuvent être également confondus.

Un avantage est que
- tout le corps est sollicité et entrainé dans l'ondulation facilitée par l'accessoire et pas seulement les jambes ;
- les ondulations notamment du bassin sont sollicitées sans limiter les mouvements du haut du corps.

Selon un mode de réalisation, le lest est entièrement immergé dans la position d'équilibre.

Selon un mode de réalisation, la position d'équilibre de l'accessoire correspond à une position du barycentre des moyens de maintien comprise entre 1 et 50 cm en dessous du niveau de l'eau.

Afin d'améliorer encore ces paramètres, la position d'équilibre de l'accessoire correspond à une position du barycentre des moyens de maintien comprise entre 15 et 60 cm en dessous du niveau de l'eau.

Enfin, le centre de gravité de l'accessoire peut être choisi sensiblement proche du centre de gravité des moyens de maintien.

Des moyens de réglages de la position du lest et/ou du poids du lest permettent d'ajuster la position d'équilibre de l'accessoire.

Selon un mode de réalisation de l'invention, l'accessoire comprend un corps permettant de fixer le flotteur et le lest.

Selon des modes de réalisations pouvant coopérer entre eux :
- Le corps de l'accessoire comporte un compartiment apte à recevoir et maintenir un lest dans une position fixe. Le compartiment peut être adapté à recevoir des lests de différentes dimensions.
- Le corps comprend les moyens de maintien.
- Les moyens de maintien sont moulés dans le corps de l'accessoire.
- Les moyens de maintien de l'accessoire sont confondus avec le lest.
- Le flotteur s'étend selon un axe vertical.
- L'accessoire comprend un bord d'attaque telle qu'une coupe hydrodynamique par exemple.

Avantageusement, lorsque l'accessoire est soumis à une force d'un nageur tendant à l'immerger progressivement tout en assurant un déplacement horizontal, une force de rappel est créée par le flotteur de sorte à accompagner l'ondulation verticale du corps du nageur dans son déplacement horizontal.

Avantageusement, le plan vertical comprenant le centre de gravité du lest est sensiblement confondu avec le plan vertical comprenant le barycentre des moyens de maintien, les plans verticaux étant orientés dans la direction de la nage.

Avantageusement, l'axe vertical comprenant le centre de gravité du lest est sensiblement confondu avec l'axe vertical comprenant le barycentre des moyens de maintien.

Avantageusement, l'axe vertical comprenant le barycentre des moyens de maintien est sensiblement confondu avec l'axe vertical comprenant le barycentre du flotteur.

Avantageusement, les moyens de maintien sont adaptés à une prise à deux mains, les deux mains se superposant en partie.

Avantageusement, les moyens de maintien sont adaptés à une prise à deux mains, les deux mains étant en position flèche.

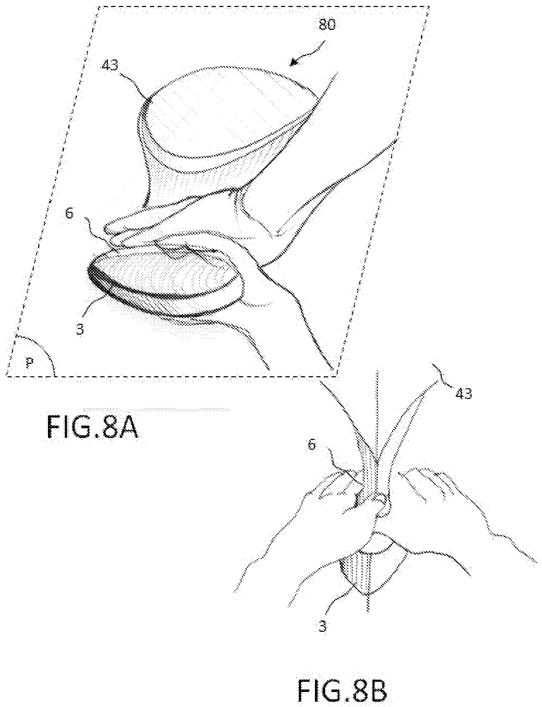

Un autre objet de l'invention concerne un accessoire d'aide à la nage décrit également au regard des figures 8A, 8B, 9A, 9B, 9C et 10 dans lequel la partie inférieure ne comprend pas de lest.

L'accessoire comprend :
- un corps formant une partie inférieure de l'accessoire destinée à être immergée lors de la nage ;
- des moyens de maintien de l'accessoire adaptés à la prise à deux mains d'un nageur, les deux mains étant destinées à se superposer en partie, les moyens de maintien s'étendant sur la partie supérieure du corps, ladite partie supérieure du corps formant une zone d'appui ;
- un flotteur permettant à l'eau d'exercer sur l'accessoire une force verticale résultante de la poussée d'Archimède opposée à la gravité.

Un autre objet de l'invention concerne un système d'aide à la nage comprenant un accessoire de nage tel que décrit précédemment et comprenant, en outre, une ceinture de lest permettant au nageur de conserver la position d'équilibre de l'accessoire lorsqu'il le maintien à bout de bras.

Un avantage est de permettre un maintien de l'ensemble formé par le « nageur équipé d'une ceinture et d'un accessoire » à une profondeur sensiblement constante et proche de la position d'équilibre.

De ce fait, la tête et les bras ne sont pas plus enfoncés que le reste du corps dans la position d'équilibre.

Cette organisation est propice à une nage axée sur la performance hydrodynamique, surtout si le nageur, équipé d'un tuba, n'a pas besoin de remonter régulièrement à la surface pour respirer.

### BREVES DESCRIPTION DES FIGURES

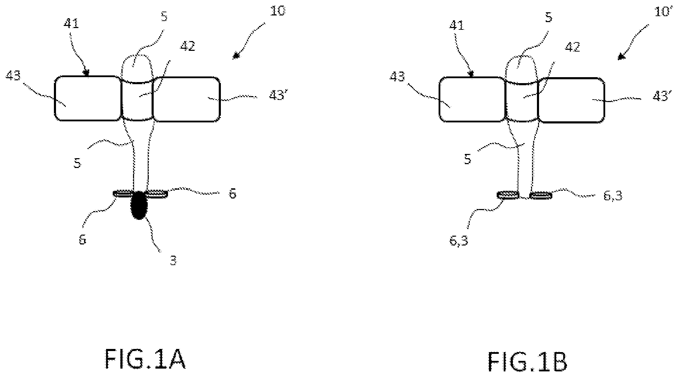

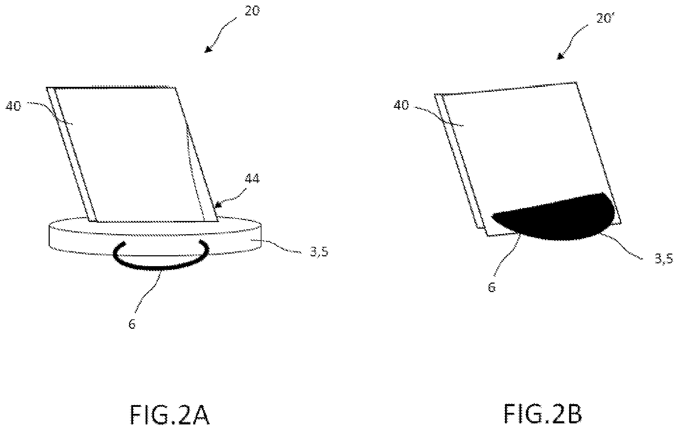

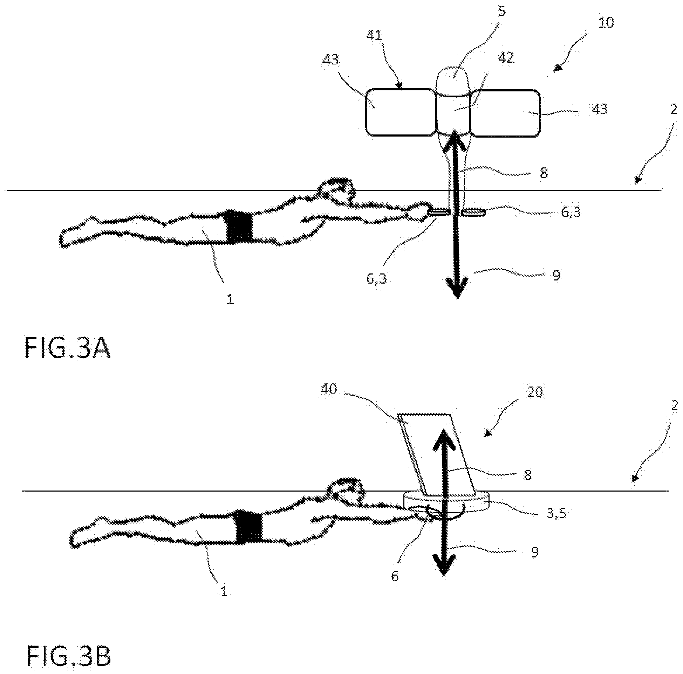

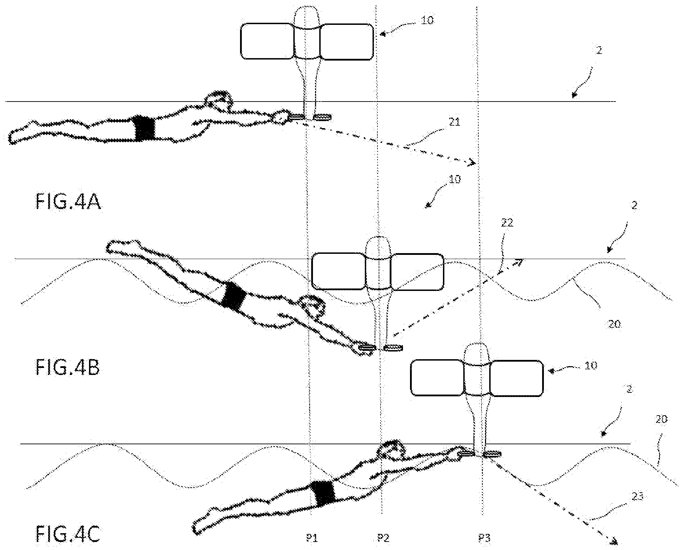

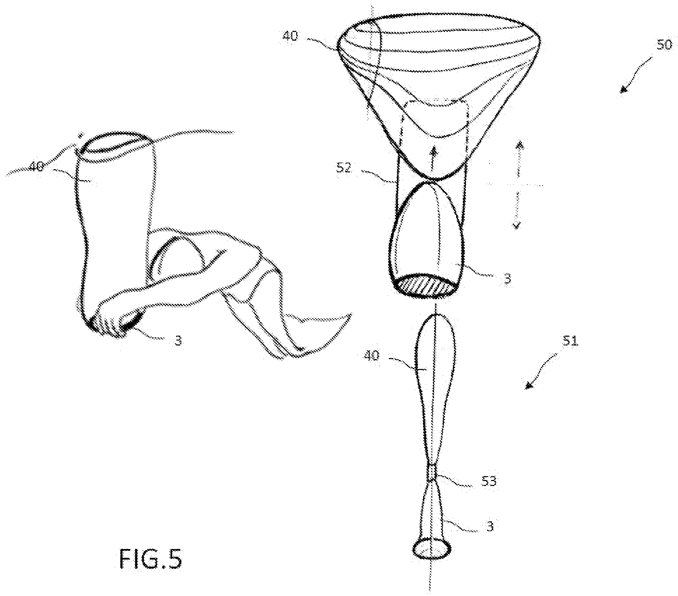

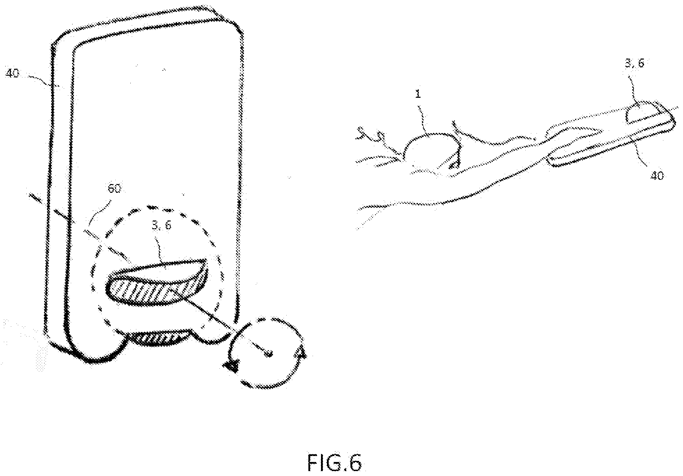

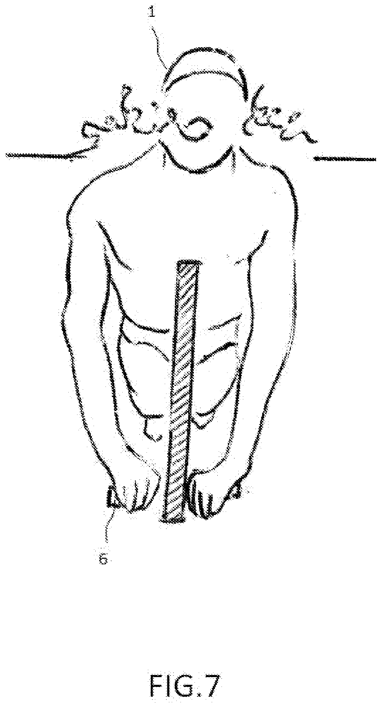

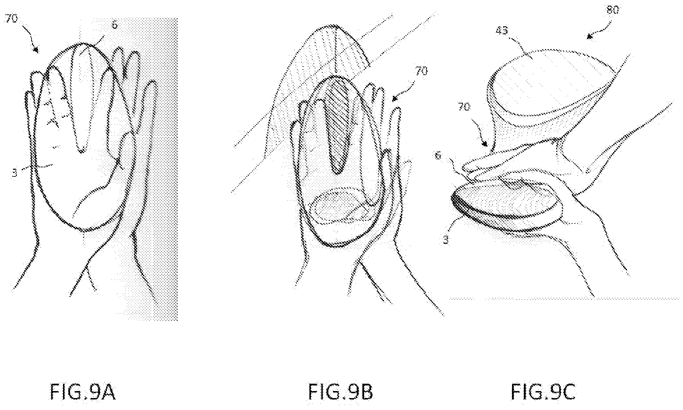

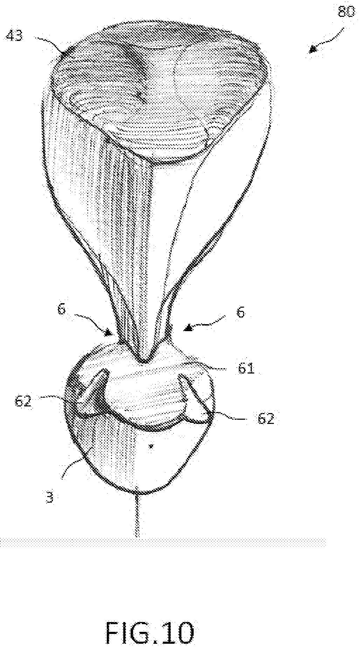

D'autres caractéristiques et avantages de l'invention ressortiront à la lecture de la description détaillée qui suit, en référence aux figures annexées, dans lesquels les exemples des figures 1 à 7 ne sont pas couverts par les revendications et qui illustrent :
▪ figure 1A, 1B : deux variantes d'un premier mode de réalisation d'un accessoire de nage ;
▪ figure 2A, 2B : deux variantes d'un second mode de réalisation d'un accessoire de nage ;
▪ figure 3A, 3B : deux utilisations de deux variantes de réalisation de l'accessoire illustrant les forces en présence ;
▪ figures 4A, 4B, 4C : différentes positions du nageur lors de l'ondulation formée par sa nage ;
▪ figure 5 : deux autres modes de réalisation avec des moyens de réglages de la distance entre le flotteur et le lest ;
▪ figure 6 : une variante de réalisation permettant un pivotement des moyens de maintien ;
▪ figure 7 : une variante de réalisation comprenant un dispositif de limitation d'oscillations ;
▪ figures 8A, 8B, 10 : un mode de réalisation de l'accessoire de l'invention compact ;
▪ figures 9A, 9B, 9C : une illustration de la prise en main flèche avec le mode de réalisation des figures 8A, 8B et 10.

### DESCRIPTION

Dans la suite de la description, on nomme la position d'équilibre ou l'équilibre de l'accessoire la position dans l'eau dans laquelle l'accessoire est lorsqu'il est soumis aux uniques forces résultantes de la gravité et de la poussée d'Archimède. Une position d'équilibre peut être définie par la profondeur exprimée en cm en dessous du niveau d'eau à laquelle se trouve le barycentre des moyens de maintien. Selon une autre approche, la position d'équilibre peut être définie par la profondeur du centre de gravité du lest.

Les figures 1A et 1B représentent un premier mode de réalisation d'un accessoire d'aide à la nage 10, 10'.

La figure 1A représente une première variante 10 du premier mode. L'accessoire 10 comprend un corps 5, un flotteur 41, des moyens de maintien tels que des poignées 6, un lest 3.

L'accessoire de nage 10 est conçu pour qu'un nageur puisse empoigner ledit accessoire au niveau de deux poignées 6. Le lest et les moyens de maintien sont situés sur une partie inférieure de l'accessoire destinée à être immergée lors de la nage. Le corps 5 s'étend verticalement. Dans la partie supérieure de l'accessoire 10 un flotteur est maintenu par une partie 42 cylindrique entourant le corps. Deux flotteurs 43 s'étendent de part et d'autre du corps.

L'élément de flottaison 41 peut être remplacé en glissant sur le corps 5 vers son extrémité supérieure. Ceci permet par exemple d'adapter le flotteur 41 au contexte de nage et au gabarit du nageur.

Le lest 3 est un poids destiné à être immergé lors de son utilisation et permet d'équilibrer l'accessoire pour qu'il soit maintenu à l'équilibre à une distance proche du niveau de l'eau. Le lest 3 peut être ajusté avec un poids permettant de définir un point d'équilibre optimum.

Dans une variante non représentée, le corps 5 comprend un lest dans sa partie inférieure de telle sorte qu'il forme une même entité. Dans ce cas de figure, le lest peut être défini par une partie pleine du corps 5 qui prolonge une partie creuse dans sa partie supérieure. Selon une autre variante, le corps 5 peut être assemblé en deux parties par moulage ou par assemblage mécanique. Une partie inférieure comprend le lest 3 et une partie supérieure permet de fixer un flotteur 41.

Un point d'équilibre optimum correspond à la position de la figure 3A, lorsque le nageur étendu à la surface de l'eau a la tête qui coupe la ligne d'eau et les bras et les mains situés sous l'eau à une faible profondeur.

La figure 1B représente une seconde variante 10' de réalisation dans laquelle le lest 3 est intégré aux moyens de maintien 6. Pour réaliser un tel accessoire, des poignées dans matériau ayant une forte densité peuvent être choisies. Le lest 3 et les moyens de maintien 5 peuvent de former qu'une seule entité.

Les figures 2A et 2B représentent un second mode de réalisation d'un accessoire d'aide à la nage 20, 20'.

La figure 2A représente une première variante 20 du second mode. L'accessoire 20 comprend un flotteur 40, des moyens de maintien tels que des poignées 6, un lest 3 et un corps 5.

Dans ce mode de réalisation, le corps 5 et le lest 3 forment une unique entité 3, 5. Le flotteur 40 est réalisé sous forme d'une planche maintenue verticalement. La planche 40 peut comporter un bord d'attaque 44 pour améliorer l'écoulement de part et d'autre de l'accessoire lors de la nage.

Selon le profil de du corps 5 ou du lest 3, un bord d'attaque peut également être prévu sur l'un des deux éléments.

Un bord de fuite peut également être réalisé sur le corps ou le flotteur ou encore sur le lest. Un profil de type NACA peut être utilisé par exemple.

La figure 2B représente une seconde variante 20' de réalisation du second mode de réalisation. Dans cette variante, le flotteur 40 comporte un compartiment afin d'y insérer le lest 3. Le flotteur peut être percé pour l'introduction du lest, par exemple une lumière de type « fente » permet de maintenir le lest 3. Dans cette variante, le lest a une forme permettant une prise aux mains de part et d'autre de la planche 40. Dans ce cas les moyens de maintien et le lest constitue la même pièce, soit la même entité comportant les deux fonctions.

Dans l'exemple de la figure 2B, le lest peut avoir une forme de disque. Selon des variantes de réalisation, la forme est sensiblement un disque avec une partie formant un grip pour permettre au nageur de tenir l'accessoire et une autre partie diamétralement opposée qui forme un bord d'attaque de part et d'autre de la planche de manière à faciliter l'écoulement de l'eau autour de l'accessoire.

Le flotteur 40 peut être réalisé avantageusement en polymère expansé ou moussé, tel que le polystyrène expansé, mousse de polyuréthane, mousse de polyéthylène, etc. Ces matériaux permettent d'une part une bonne flottaison et permettent d'autre part de maintenir par contact physique et frottement un lest 3 qui serait inséré dans une fente de la planche.

Un nageur peut maintenir l'accessoire directement sur le lest 3. Un avantage est que la prise en main de l'accessoire contribue à maintenir le lest dans le flotteur 40. Selon le mode de réalisation de la figure 2B, la force qui est exercée par le nageur sur l'accessoire lors de la nage permet de générer une force du lest 3 vers l'intérieur d'un bord de la fente ce qui contribue à le maintenir dans la fente.

La figure 3A représente l'accessoire 10 selon la première variante du premier mode lorsqu'un nageur le maintien dans l'eau à l'horizontale. L'accessoire étant ainsi maintenu, deux forces lui sont soumises permettant de l'immerger partiellement. Une première force est exercée par le poids de l'accessoire et principalement du lest. Cette première force 9 est dirigée vers le bas ne dépend pas de l'immersion de l'accessoire; elle s'oppose à une seconde force qui est la résultante de la poussée d'Archimède. Cette seconde force est dirigée vers le haut et est variable en fonction de la profondeur de l'accessoire. Plus l'accessoire est immergé, plus la poussée d'Archimède exerce une force importante pour faire remonter l'accessoire à la surface 2. Si l'accessoire est proche de la surface 2, la résultante des forces est de même direction que la gravité, entrainant l'accessoire vers le bas. Inversement, lorsque l'accessoire est presque totalement immergé, la résultante des forces est de même direction que la poussée d'Archimède 8 et entraîne l'accessoire vers le haut.

Ainsi le flotteur 41 et le lest 3 sont choisis de sorte à obtenir un point d'équilibre juste en dessous du niveau de l'eau 2. Le point d'équilibre optimum est obtenu pour la position nominale d'un nageur étendu dans l'eau les bras allongés devant lui. Cette position selon le poids et la morphologie des nageurs est idéalement comprise entre 10 et 60 cm de profondeur. Les résultats optimum notamment liés à l'entretien de l'ondulation sont obtenus pour une profondeur de 15 à 40 cm. A ce point d'équilibre, la résultante des forces 8 et 9 est nulle.

La figure 3B représente un nageur 1 avec l'accessoire de la première variante du second mode décrit à la figure 2A. Dans ce cas, les deux forces 9, 8 générée d'une part par la gravité et d'autre part par la poussée d'Archimède sont également exercées sur l'accessoire.

Chacun des deux modes comporte un avantage. Le premier mode permet d'accentuer plus facilement l'ondulation du nageur grâce à la forme du flotteur qui permet de faire remonter plus facilement le nageur lorsqu'il descend profondément. Le nageur obtient une sensation de vitesse lors de sa remontée contribuant à générer une force d'entrainement. Cette force permet au nageur de sentir la propagation de l'ondulation dans le corps lorsqu'il pratique une nage basée sur l'ondulation du corps.

Dans le second mode, le profil plus aérodynamique permet d'améliorer la vitesse de nage et sera peut-être préféré des nageurs plus aguerris.

Les figures 4A, 4B, 4C sont représentées afin de mieux comprendre les effets que procure l'accessoire lors d'une nage ondulée. Chacune des figures représente une position respectivement P1, P2 et P3.

P1 représente la position nominale. Juste après la position initiale, le nageur 1 commence à onduler en plongeant l'accessoire 10 en dessous de sa position d'équilibre. La résultante de la direction de son mouvement est représentée par le vecteur 21. Tout d'abord le poids du lest de l'accessoire permet d'obtenir et d'accentuer la sensation de plongeon jusqu'à une certaine profondeur. Puis, juste avant d'arriver à la position P2, le nageur commence à ressentir la force de rappel causée par l'augmentation de la poussée d'Archimède.

La position P2 représente la position dans laquelle le nageur est lorsque les moyens de maintien sont sensiblement dans le creux de l'ondulation 20, dans la position la plus profonde. Dans cette position, la résultante de la poussée d'Archimède est à une intensité sensiblement maximale vis-à-vis de la position du nageur dans son ondulation et contre la gravité. Elle entraine le nageur vers la surface de l'eau en accompagnant son mouvement de remontée représenté par le vecteur 22. La poussée d'Archimède qui s'exerce sur l'accessoire facilite le déroulé de son ondulation 20. Le nageur est presque porté par l'entrainement de la poussée d'Archimède qui se réduit à mesure du rapprochement de la surface de l'eau. Puis le poids du lest 3 freine peu à peu cette remontée jusqu'à la position P3.

La position P3 représente le cas où le nageur est remonté presque à la surface de l'eau, lorsque le barycentre des moyens de maintien de l'accessoire est au point le plus haut de l'ondulation 20, ce point correspond à la position la plus haute dans l'ondulation du centre de gravité du lest. Dans cette position, la poussée d'Archimède est minimale car le corps 5 et le flotteur 10 sont quasiment totalement hors de l'eau. Le poids du lest 3 soumis à la gravité contre la poussée d'Archimède et entraine l'accessoire vers le fond. La force de gravité permet au nageur 1 de revenir selon une direction 23 lui permettant de poursuivre son ondulation 20. Le nageur ressent le mouvement cyclique et sinusoïdal de l'ondulation 20 qui est accentué par l'accessoire 10.

La figure 5 représente un autre mode de réalisation, dans lequel l'accessoire 50 comprend un lest 3 et un flotteur 40. Le corps peut être dans ce cas le lest 3. Une crémaillère 52 permet de régler la distance entre le lest et le flotteur. Il s'agit de moyens de réglages 52 permettant de régler le centre de gravité de l'accessoire et donc la position d'équilibre dans l'eau de l'accessoire. Ces moyens de réglages permettent d'ajuster la profondeur d'équilibre à la distance souhaitée sous l'eau en fonction du gabarit du nageur.

Un autre mode de réalisation 51 est représenté à la figure 5. Dans ce mode, une bague 53 coulisse le long du flotteur 40 sur une zone permettant de déplacer sensiblement le point d'équilibre sous l'eau.

L'accessoire permet d'atteindre un objectif du nageur qui consiste à adopter la vitesse de déplacement la plus importante sur une distance donnée tout en dépensant la plus petite quantité d'énergie métabolique. Dans ce contexte, le coût énergétique du déplacement apparaît comme étant un paramètre déterminant de l'apprentissage à la quête de performance.

Un avantage de l'accessoire de nage est qu'il permet d'actionner et d'accompagner des mouvements d'un nageur par l'intermédiaire d'oscillations de translation verticale avec pour visée l'amélioration du geste ondulatoire globale et la dépense énergétique associée.

La figure 5 représente enfin un mode de réalisation dans lequel l'accessoire peut être avantageusement utilisé avec une mono-palme formant ainsi un système complet d'aide à une nage basée sur une ondulation du corps du nageur. L'effet combinatoire de la mono-palme et de l'accessoire permet d'augmenter la sensation d'oscillation nécessaire et constitue un système performant pour l'apprentissage d'une telle nage. Les effets de l'ondulation étant amplifiés au niveau du haut du corps par l'accessoire et au niveau du bas du corps par la mono-palme un nageur ressent l'ondulation accentuée sur tout l'ensemble du corps.

La figure 5 permet de définir également un mode de réalisation dans lequel l'accessoire peut comprendre un corps creux comportant une première partie creuse supérieure formant un flotteur et une seconde partie creuse séparée de la première partie dans laquelle un liquide telle que de l'eau peut être inséré. La seconde partie peut comprendre une ouverture pour l'introduction du liquide et un bouchon permettant de refermer la seconde partie. Un avantage de ce mode de réalisation est que le poids du lest peut être ajusté selon la configuration choisie. La configuration choisie permet de définir le point d'équilibre selon l'oscillation souhaitée et le gabarit du nageur.

Selon un autre mode de réalisation, le flotteur peut être un élément gonflable qui permet d'ajuster la position du point d'équilibre selon le volume gonflé.

La figure 6 représente une variante de réalisation dans laquelle le flotteur 40, tel qu'une planche, comporte un compartiment permettant de fixer des moyens de maintien 6 tels que des saillies. Ces dernières permettent d'être empoignées de part et d'autre du flotteur par un nageur 1. Dans cette variante, le lest 3 peut être soit :
- soit intégré dans la partie basse du flotteur formant un corps intégré au flotteur, par exemple d'une densité plus élevée ;
- soit intégré dans les poignées 6 formant saillies.

Cette variante présente une caractéristique permettant de faire pivoter les moyens de maintien autour d'un axe 60 de telle sorte qu'elle puisse permettre à la planche 40 d'être utilisée conventionnement comme une planche de piscine.

Lorsque les moyens de maintien ont pivoté, la trainée qui est causée par ces derniers est minimale. En effet, la planche étant utilisée à plat, les poignées 6 forment une arrête qui par ailleurs permettent de former un élément de guidage utile.

La figure 7 représente un mode de réalisation dans lequel l'accessoire comprend un dispositif de limitation des oscillations. Dans l'exemple de la figure 7, ce dispositif est formé par une surface intégrée aux poignées 6 de telle sorte que le nageur arrivant au sommet de l'ondulation pour prendre sa respiration peut prendre appui sur cette surface pour remonter plus facilement. Un effet bénéfique est de ralentir le mouvement en ce point, situé au sommet de l'ondulation, lorsque le nageur prend appui sur les moyens de maintien. Si le nageur ne prend pas appui, alors la surface portante peut ne pas procurer cet effet, c'est au choix du nageur. Les moyens de maintien peuvent donc comprendre un profilé orienté de telle sorte qu'il minimise la trainée lors de l'ondulation et optimise la génération d'une force d'appui lorsque le nageur tend ses bras vers le fond en prenant appui sur les poignées.

Selon une variante de réalisation, le dispositif de limitation d'oscillations peut comprendre une surface de portance sensiblement horizontale agencée directement sur le flotteur 50 par exemple à son extrémité supérieure.

Selon une autre variante cette surface de portance peut être agencée directement sur le lest.

L'accessoire permet de faire moins d'effort et d'accompagner le nageur grâce à un dispositif flottant qui convertit et la conserve l'énergie du nageur par l'intermédiaire d'un dispositif oscillant. En outre, l'accessoire vise à accompagner ou influencer la cinématique de nage et à évoluer à une profondeur de surface contrôlée. Cela permet de moins solliciter les articulations et les tendons du nageur tout en lui permettant un apprentissage.

Ainsi l'accessoire peut comprendre une première fonctionnalité relative à une aide technique et une seconde fonctionnalité relative à une aide pédagogique.

Un effet supplémentaire ressenti par un nageur utilisant l'accessoire est l'obtention de meilleures sensations de nage grâce à la fluidité obtenue de l'oscillation de son corps et une certaine décontraction pour nager sans lutte et sans crispation grâce à l'effet d'entrainement que procure l'accessoire dans la nage.

L'inertie oscillatoire du dispositif permet de lisser l'effort musculaire sur un mouvement sinusoïdal. La force de poussée vers le bas du poids du corps va se convertir en force de poussée vers le haut par un mécanisme d'action/réaction sans que le nageur déploie beaucoup d'efforts.

En outre, lors d'une nage ondulée, l'inertie oscillatoire du dispositif permet de lisser le déplacement sinusoïdal et permet de réduire « le temps au neutre » entre les deux phases ascendante et descendante.

Selon les cas d'utilisation, l'accessoire comprend plusieurs avantages :
- utilisé en haute mer ou au bord d'une plage, l'accessoire permet de récupérer une partie de l'énergie oscillatoire de la houle ;
- couplé à une voile, l'accessoire peut être utilisé comme un outil de régulation mécanique.

Le mouvement cyclique entrainé par la coexistence des deux forces en action-réaction autour d'un point d'équilibre permet la restitution de l'énergie fournie par un nageur pour une utilisation en mode de résonance par l'intermédiaire de la montée et la descente cyclique d'un poids ou d'un flotteur.

L'accessoire de nage de l'invention vise la conservation des forces cinétiques et potentielles et la minimisation des résistances à l'avancement corollaires aux frottements hydrodynamiques.

L'accessoire actionné par une prise aux mains du nageur fonctionne comme un oscillateur harmonique dont l'évolution au cours du temps est décrite par une fonction approximativement sinusoïdale dont l'amplitude est constante ou ajustable.

Selon un mode amélioré de l'invention, l'accessoire de nage peut être couplé avec une ceinture de lest. L'invention concerne également un système formé par l'accessoire de nage et la ceinture. La ceinture permet d'équilibrer la flottaison de l'ensemble formé par l'accessoire et le corps.

Avec une ceinture lestée, l'invention permet au nageur d'évoluer à une profondeur contrôlée pour éviter la trainée de vague et sa résistance

Les réglages du lest ou du flotteur de l'accessoire peuvent être effectués de manière à prendre en compte l'utilisation d'une ceinture de lest ou pas et prendre en compte le gabarit du corps du nageur par exemple de son poids. Les réglages seront en effet différents lorsque l'accessoire est utilisé par exemple par un enfant ou un adulte.

L'amplitude de l'oscillation du dispositif comme la profondeur de la zone de coopération avec le nageur est réglable avec le poids du lest et la géométrie ou la surface du flotteur.

L'accessoire de l'invention est particulièrement adapté à l'apprentissage du papillon ou du dauphin. Il est également adapté à l'apprentissage de la brasse dans laquelle l'ondulation du corps doit être maitrisée.

L'accessoire permet en outre d'améliorer la respiration du nageur lors de la nage. Le retour aérien pour l'inspiration se règle de manière cyclique en fonction des temps d'apnée choisis ou imposés par le nageur. L'inspiration est réalisée en forçant par une poussée des bras l'immersion en profondeur du dispositif. L'appui est réalisé par une opposition de l'action des bras et la poussée d'Archimède renforcée dans une moindre mesure par la portance hydrodynamique.

L'accessoire peut être également fixé autour de la taille comme une ceinture, le flotteur étant positionné sur le dos du nageur. Utilisé de cette manière, l'accessoire permet de libérer l'ensemble du corps tout en bénéficiant de l'oscillation assistée.

Selon une autre utilisation, l'accessoire peut être utilisé par maintien entre les jambes pour travailler les chaînes musculaires. Cette utilisation permet de faciliter la maîtrise et le contrôle du tangage et du roulis.

Enfin, le rythme de l'ondulation du nageur peut se caler sur la fréquence d'ondulation du dispositif. Cette dernière peut être réglée par une variation du poids du flotteur et de la distance entre le poids et le flotteur.

Dans la partie qui suit les figures 8A, 8B, 9A, 9B, 9C et 10 sont utilisés pour décrire un mode de réalisation de l'invention et sont également utilisées pour décrire un autre objet de l'invention concernant un accessoire d'aide à la nage sans lest.

Selon un mode de réalisation de l'invention décrit au regard des figures 8A, 8B, 9A, 9B, 9C et 10, l'accessoire 80 d'aide à la nage peut présenter une forme compacte.

Les moyens de maintien 6 permettent d'accueillir les mains d'un nageur autour d'un élément de jonction du flotteur 43 et de la partie comprenant le lest 3.

Dans ce mode de réalisation, de préférence le flotteur a une largeur inférieure à 40 cm. Dans ce cas, l'accessoire peut être facilement rangé dans un sac, notamment un sac de natation.

Avantageusement, dans la position d'équilibre de l'accessoire dans l'eau la partie des moyens de maintien 6 formant la jonction du flotteur 43 et du lest 3 comprend un bord d'attaque profilé permettant de réduire les frottements avec l'eau. Dans ce mode, comme dans tous les modes de réalisation de l'invention, la partie inférieure de l'accessoire comprenant le lest 3 est adaptée à maintenir le barycentre des moyens de maintien en dessous de la surface de l'eau lorsque l'accessoire est dans une position d'équilibre P1 dans l'eau et est maintenu au besoin verticalement. Dans tous les modes de réalisation, la position d'équilibre de l'accessoire est définie lorsqu'il est en position verticale de sorte à obtenir un point de référence du niveau de flottaison.

Une première prise en main de l'accessoire de l'invention permet avantageusement de saisir les moyens de maintien avec les deux mains, chaque pouce permettant une préhension du moyen de maintien tout en permettant au nageur de conserver une position stable.

Une seconde prise en main 70 de l'accessoire de l'invention, appelée « prise en main flèche », permet avantageusement une préhension de l'accessoire entre les doigts de chaque main, les deux mains se superposant l'une à l'autre lors de la nage. Cette prise en main flèche est particulièrement avantageuse d'un point de vue biomécanique lors de la nage pour travailler l'ondulation du nageur. En effet, la tenue de l'accessoire est naturellement réalisée sans que le nageur ait besoin de serrer l'élément de jonction. La vitesse du nageur lors de la nage exerce une force naturellement sur la jonction entre les deux doigts de chaque main de sorte à maintenir l'accessoire entre les mains du nageur.

Selon ce mode de réalisation, la partie supérieure 61 de la partie comprenant le lest 3 dans une variante peut être sensiblement plane de sorte à former un support aux mains lorsqu'elles sont positionnées autour des moyens de maintien 6.

Selon une autre variante qui peut être combinée avec ce mode de réalisation, la partie supérieure 61 de la partie comprenant le lest 3 peut comprendre des encoches 62 pour accueillir un ou plusieurs doigts.

Dans ce mode de réalisation représenté aux figures 8A, 8B, 9A, 9B, 9C et 10, la surface des moyens de maintien s'étend à celle d'un volume 3D profilé de sorte à être adapté à la prise à deux mains. La partie inférieure comprenant le lest 3 peut être de forme aérodynamique telle qu'une forme de savonnette ou d'une souris renversée. La surface inférieure de la partie inférieure comprenant le lest 3 peut être légèrement bombée de sorte à favoriser un écoulement à sa surface.

Ainsi dans ce mode de réalisation, les moyens de maintien 6 comprennent une partie de la jonction entre le lest 3 et le flotteur 43 et une partie latérale de la partie comprenant le lest 3 de part et d'autre de la jonction.

Selon tous les modes de réalisation de l'invention, la position d'équilibre de l'accessoire peut être définie par rapport à un plan P vertical perpendiculaire au plan de la surface du plan d'eau, notamment lorsque l'accessoire est utilisé.

Une particularité commune à tous les modes de réalisation de l'invention au regard de toutes les figures est que le plan P formant un plan vertical de symétrie de l'accessoire comprend le centre de gravité de l'accessoire et le centre de gravité du lest 3. En outre, ce même plan P comprend le barycentre de l'accessoire et le barycentre des moyens de maintien 6. En outre, le barycentre des moyens de maintien 6 et le barycentre du flotteur 43.

Dans ce mode de réalisation comme tous les modes de réalisation, l'axe vertical passant par le barycentre des moyens de maintien est sensiblement identique à l'axe vertical passant par le centre de gravité du lest. On peut également noté que l'axe vertical passant par le barycentre des moyens de maintien est sensiblement identique à l'axe vertical passant par le barycentre du flotteur.

Ainsi l'accessoire d'aide à la natation dans ce dernier mode de réalisation se présente comme un élément compact. Dans tous les modes de réalisations, l'accessoire d'aide à la natation a des propriétés de verticalité permettant de stabiliser le nageur lors de la nage.

Un autre objet de l'invention concerne un accessoire d'aide à la nage décrit également au regard des figures 8A, 8B, 9A, 9B, 9C et 10 dans lequel la partie inférieure ne comprend pas de lest.

L'accessoire comprend :
- un corps formant une partie inférieure de l'accessoire destinée à être immergée lors de la nage ;
- des moyens de maintien de l'accessoire adaptés à la prise à deux mains d'un nageur, les deux mains étant destinées à se superposer en partie, les moyens de maintien s'étendant sur la partie supérieure du corps, ladite partie supérieure du corps 3 formant une zone d'appui ;
- un flotteur permettant à l'eau d'exercer sur l'accessoire une force verticale résultante de la poussée d'Archimède opposée à la gravité.

Dans ce mode de réalisation, les moyens de maintien 6 de l'accessoire sont adaptés à une prise en main flèche des deux mains d'un nageur. Une partie des moyens de maintien forme une jonction entre le corps 3 et le flotteur 43 et sont destinés à être positionnées entre au moins deux doigts du nageur. Dans cet objet, la partie inférieure est désignée sur les mêmes figures par la notation 3 qui désignait dans le précédent mode de réalisation le lest ou la partie inférieure comprenant le lest.

La partie des moyens de maintien formant une jonction entre le flotteur 43 et la partie inférieure 3 est profilé de sorte à avoir une épaisseur adaptée à être introduite entre au moins deux doigts lors de la nage. C'est-à-dire qu'une épaisseur cible est inférieure à 5 cm. Préférentiellement, la largeur de la jonction accueillant les mains est inférieure à 3cm.

Avantageusement cet objet peut être constitué en un seul et même bloc. Il est donc compacte.

Un avantage est de permettre le maintien de l'accessoire 80 d'aide à la nage tout en offrant un profilé facilitant l'écoulement de l'eau de part et d'autre de l'accessoire.

Cet objet peut être combiné avec toutes les variantes précédemment décrites au regard des figures 1A, 1B, 2A, 2B, 3A, 3B, 4A, 4B, 4C, 5, 6 et 7 qui sont compatibles avec l'accessoire d'aide à la nage ne comprenant pas de lest. Notamment, les centres de gravité de l'accessoire, des moyens de maintien, du flotteur et de la partie inférieure sont compris dans un même premier plan vertical. En outre, les barycentres de l'accessoire, des moyens de maintien, du flotteur et de la partie inférieure sont également compris dans un même second plan vertical. Ces premier et second plans sont préférentiellement confondus.

## Revendications

1. Accessoire (10, 10', 20, 20', 50, 51, 80) pour la pratique d'une nage comportant :
• des moyens de maintien (6) de l'accessoire lors de la nage adaptés à la prise à deux mains définissant un premier type de préhension de l'accessoire ;
• un flotteur (41, 40) permettant à l'eau d'exercer sur l'accessoire une force verticale (8) résultante de la poussée d'Archimède opposée à la gravité ;
• un corps (3, 5) comprenant un lest (3) permettant de maintenir le barycentre des moyens de maintien (6) sensiblement en dessous de la surface de l'eau (2) lorsque l'accessoire est dans une position d'équilibre (P1) dans l'eau,
les moyens de maintien (6) forment une jonction entre le corps (3, 5) et le flotteur (41, 40) qui présente un bord d'attaque profilé permettant de réduire les frottements avec l'eau, et le corps (3, 5) présente une partie supérieure formant une zone d'appui destinée aux mains d'un nageur configuré pour permettre un deuxième type de préhension de l'accessoire.

2. Accessoire pour la pratique d'une nage selon la revendication 1, **caractérisé en ce que** le centre de gravité du lest (3) et le barycentre des moyens de maintien (6) sont sensiblement proches.

3. Accessoire pour la pratique d'une nage selon la revendication 1, **caractérisé en ce que** le lest (3) est entièrement immergé dans la position d'équilibre (P1).

4. Accessoire pour la pratique d'une nage selon l'une quelconque des revendications 1 à 3, **caractérisé en ce que** la position d'équilibre (P1) de l'accessoire correspond à une position du barycentre des moyens de maintien (6) comprise entre 1 et 60 cm en dessous du niveau de l'eau (2).

5. Accessoire pour la pratique d'une nage selon l'une quelconque des revendications 1 à 4, **caractérisé en ce que** le centre de gravité de l'accessoire est sensiblement proche du centre de gravité des moyens de maintien (6).

6. Accessoire pour la pratique d'une nage selon l'une quelconque des revendications 1 à 5, **caractérisé en ce que** le corps (5) permet de fixer le flotteur (41) et le lest (3).

7. Accessoire pour la pratique d'une nage selon l'une quelconque des revendications 1 à 6, **caractérisé en ce que** des moyens de réglages (52, 53) de la position du lest (3) et/ou du flotteur (40) permettent d'ajuster la position d'équilibre de l'accessoire sous la ligne d'eau (2).

8. Accessoire pour la pratique d'une nage selon l'une quelconque des revendications 1 à 7, **caractérisé en ce que** l'accessoire comporte un compartiment apte à maintenir des lests dans une position fixe.

9. Accessoire pour la pratique d'une nage selon l'une quelconque des revendications 1 à 8, **caractérisé en ce que** lorsque l'accessoire est soumis à une force d'un nageur tendant à l'immerger progressivement tout en assurant un déplacement horizontal, une force de rappel est créée par le flotteur de sorte à accompagner l'ondulation du corps du nageur dans son déplacement horizontal.

10. Accessoire (80) pour la pratique d'une nage selon l'une quelconque des revendications 1 à 9, **caractérisé en ce que** le plan vertical comprenant le centre de gravité du lest (3) est sensiblement confondu avec le plan vertical comprenant le barycentre des moyens de maintien (6), les plans verticaux étant orientés dans la direction de la nage.

11. Accessoire (80) pour la pratique d'une nage selon l'une quelconque des revendications 1 à 10, **caractérisé en ce que** l'axe vertical comprenant le centre de gravité du lest (3) est sensiblement confondu avec l'axe vertical comprenant le barycentre des moyens de maintien (6).

12. Accessoire (80) pour la pratique d'une nage selon l'une quelconque des revendications 1 à 11, **caractérisé en ce que** l'axe vertical comprenant le barycentre des moyens de maintien (6) est sensiblement confondu avec l'axe vertical comprenant le barycentre du flotteur (43).

13. Accessoire (80) pour la pratique d'une nage selon l'une quelconque des revendications 1 à 12, **caractérisé en ce que** les moyens de maintien sont adaptés à une prise à deux mains, les deux mains se superposant en partie.

14. Accessoire (80) pour la pratique d'une nage selon l'une quelconque des revendications 1 à 13, **caractérisé en ce que** les moyens de maintien sont adaptés à une prise à deux mains, les deux mains étant en position flèche.

15. Accessoire (80) pour la pratique d'une nage selon l'une quelconque des revendications 1 à 14, **caractérisé en ce que** :
• le corps (3) forme une partie inférieure de l'accessoire destinée à être immergée lors de la nage ;
• des moyens de maintien (6) de l'accessoire adaptés à la prise à deux mains d'un nageur, les deux mains étant destinées à se superposer en partie.

16. Accessoire (10, 10', 20, 20', 50, 51) pour la pratique d'une nage-selon la revendication 15, **caractérisé en ce que** les moyens de maintien (6) de l'accessoire sont adaptés à une prise en main flèche des deux mains d'un nageur, une partie des moyens de maintien étant destinés à être positionnées entre au moins deux doigts du nageur.

17. Système d'aide à la nage comprenant un accessoire pour la pratique d'une nage selon l'une quelconque des revendications 1 à 16, **caractérisé en ce qu'**il comprend en outre une ceinture de lest permettant au nageur de conserver la position d'équilibre de l'accessoire lorsqu'il le maintien à bout de bras.

## Patentansprüche

1. Zubehör (10, 10', 20, 20', 50, 51, 80) für das Praktizieren eines Schwimmens, aufweisend:
• Haltemittel (6) des Zubehörs beim Schwimmen, die geeignet sind, von zwei Händen erfasst zu werden, die einen ersten Greiftyp des Zubehörs definieren;
• einen Schwimmer (41, 40), der dem Wasser erlaubt, auf das Zubehör eine vertikale Kraft (8) als Ergebnis des Archimedischen Auftriebs entgegengesetzt zur Schwerkraft auszuüben;
• einen Körper (3, 5), umfassend einen Ballast (3), der erlaubt, den Schwerpunkt der Haltemittel (6) etwa unterhalb der Oberfläche des Wassers (2) zu halten, wenn das Zubehör in einer Gleichgewichtsposition (P1) im Wasser ist,
wobei die Haltemittel (6) eine Verbindung zwischen dem Körper (3, 5) und dem Schwimmer (41, 40) bilden, der einen Angriffsrand mit Profil aufweist, der erlaubt, die Reibungen mit dem Wasser zu reduzieren, und der Körper (3, 5) einen oberen Teil aufweist, der eine Stützzone bildet, die für die Hände eines Schwimmers vorgesehen sind, konfiguriert, um einen zweiten Greiftyp des Zubehörs zu erlauben.

2. Zubehör für das Praktizieren eines Schwimmens nach Anspruch 1, **dadurch gekennzeichnet, dass** das Schwerkraftzentrum des Ballasts (3) und der Schwerpunkt der Haltemittel (6) etwa nah sind.

3. Zubehör für das Praktizieren eines Schwimmens nach Anspruch 1, **dadurch gekennzeichnet, dass** der Ballast (3) vollständig in der Gleichgewichtsposition (P1) eingetaucht ist.

4. Zubehör für das Praktizieren eines Schwimmens nach einem der Ansprüche 1 bis 3, **dadurch gekennzeichnet, dass** die Gleichgewichtsposition (P1) des Zubehörs einer Position des Schwerpunkts der Haltemittel (6) entspricht, die zwischen 1 und 60 cm unterhalb des Standes des Wassers (2) liegt.

5. Zubehör für das Praktizieren eines Schwimmens nach einem der Ansprüche 1 bis 4, **dadurch gekennzeichnet, dass** das Schwerkraftzentrum des Zubehörs etwa nah dem Schwerkraftzentrum der Haltemittel (6) ist.

6. Zubehör für das Praktizieren eines Schwimmens nach einem der Ansprüche 1 bis 5, **dadurch gekennzeichnet, dass** der Körper (5) erlaubt, den Schwimmer (41) und den Ballast (3) zu befestigen.

7. Zubehör für das Praktizieren eines Schwimmens nach einem der Ansprüche 1 bis 6, **dadurch gekennzeichnet, dass** Einstellmittel (52, 53) der Position des Ballasts (3) und/oder des Schwimmers (40) erlauben, die Gleichgewichtsposition des Zubehörs unter der Linie des Wassers (2) zu korrigieren.

8. Zubehör für das Praktizieren eines Schwimmens nach einem der Ansprüche 1 bis 7, **dadurch gekennzeichnet, dass** das Zubehör ein Fach aufweist, das imstande ist, Ballaste in einer festen Position zu halten.

9. Zubehör für das Praktizieren eines Schwimmens nach einem der Ansprüche 1 bis 8, **dadurch gekennzeichnet, dass**, wenn das Zubehör einer Kraft eines Schwimmers unterzogen wird, der dazu neigt, nach und nach bei Gewährleistung einer horizontalen Verlagerung einzutauchen, von dem Schwimmer eine Rückholkraft derart erzeugt wird, dass die Wellenbewegung des Körpers des Schwimmers bei seiner horizontalen Verlagerung begleitet wird.

10. Zubehör (80) für das Praktizieren eines Schwimmens nach einem der Ansprüche 1 bis 9, **dadurch gekennzeichnet, dass** die vertikale Ebene, umfassend das Schwerkraftzentrum des Ballasts (3), etwa mit der vertikalen Ebene, umfassend den Schwerpunkt der Haltemittel (6), zusammenfällt, wobei die vertikalen Ebenen in der Richtung des Schwimmens ausgerichtet sind.

11. Zubehör (80) für das Praktizieren eines Schwimmens nach einem der Ansprüche 1 bis 10, **dadurch gekennzeichnet, dass** die vertikale Achse, umfassend das Schwerkraftzentrum des Ballasts (3), etwa mit der vertikalen Achse, umfassend den Schwerpunkt der Haltemittel (6), zusammenfällt.

12. Zubehör (80) für das Praktizieren eines Schwimmens nach einem der Ansprüche 1 bis 11, **dadurch gekennzeichnet, dass** die vertikale Achse, umfassend den Schwerpunkt der Haltemittel (6), etwa mit der vertikalen Achse, umfassend den Schwerpunkt des Schwimmers (43), zusammenfällt.

13. Zubehör (80) für das Praktizieren eines Schwimmens nach einem der Ansprüche 1 bis 12, **dadurch gekennzeichnet, dass** die Haltemittel für ein Ergreifen mit zwei Händen geeignet sind, wobei sich die zwei Hände teilweise überlappen.

14. Zubehör (80) für das Praktizieren eines Schwimmens nach einem der Ansprüche 1 bis 13, **dadurch gekennzeichnet, dass** die Haltemittel für ein Ergreifen mit zwei Händen geeignet sind, wobei die zwei Hände in Pfeilposition sind.

15. Zubehör (80) für das Praktizieren eines Schwimmens nach einem der Ansprüche 1 bis 14, **dadurch gekennzeichnet, dass**:
• der Körper (3) einen unteren Teil des Zubehörs bildet, der bestimmt ist, beim Schwimmen eingetaucht zu sein;
• Haltemittel (6) des Zubehörs für das Ergreifen mit zwei Händen eines Schwimmers geeignet sind, wobei die zwei Hände dazu bestimmt sind, sich teilweise zu überlappen.

16. Zubehör (10, 10', 20, 20', 50, 51) für das Praktizieren eines Schwimmens nach Anspruch 15, **dadurch gekennzeichnet, dass** die Haltemittel (6) des Zubehörs für das pfeilförmige Ergreifen mit zwei Händen eines Schwimmers geeignet sind, wobei ein Teil der Haltemittel bestimmt ist, zwischen mindestens zwei Fingern des Schwimmers positioniert zu sein.

17. Schwimmhilfesystem, umfassend ein Zubehör für das Praktizieren eines Schwimmens nach einem der Ansprüche 1 bis 16, **dadurch gekennzeichnet, dass** es ferner einen Ballastgürtel umfasst, der es dem Schwimmer erlaubt, die Gleichgewichtsposition des Zubehörs beizubehalten, wenn er es mit gestreckten Armen hält.

## Claims

1. An accessory (10, 10', 20, 20', 50, 51, 80) for swimming including:
• holding means (6) for holding the accessory during swimming adapted to the two-handed grip defining a first accessory gripping type;
• a floater (41, 40) enabling water to exert on the accessory a vertical force (8) resulting from the buoyancy opposite to gravity;
• a body (3, 5) comprising a ballast (3) enabling the barycentre of the holding means (6) to be held substantially below the water surface (2) when the accessory is in a balance position (P1) in water,
the holding means (6) form a junction between the body (3, 5) and the floater (41, 40) which has a shaped leading edge enabling water frictions to be reduced, and the body (3, 5) has an upper part forming an abutment zone intended to the hands of a swimmer configured to allow a second accessory gripping type.

2. The accessory for swimming according to claim 1, **characterised in that** the centre of gravity of the ballast (3) and the barycentre of the holding means (6) are substantially close to each other.

3. The accessory for swimming according to claim 1, **characterised in that** the ballast (3) is fully submerged in the balance position (P1).

4. The accessory for swimming according to any of claims 1 to 3, **characterised in that** the balance position (P1) of the accessory corresponds to a position of the barycentre of the holding means (6) between 1 and 60 cm below the water level (2).

5. The accessory for swimming according to any of claims 1 to 4, **characterised in that** the centre of gravity of the accessory is substantially close to the centre of gravity of the holding means (6).

6. The accessory for swimming according to any of claims 1 to 5, **characterised in that** the body (5) enables the floater (41) and the ballast (3) to be attached.

7. The accessory for swimming according to any of claims 1 to 6, **characterised in that** setting means (52, 53) for setting the position of the ballast (3) and/or of the floater (40) enable the balance position of the accessory to be adjusted under the water line (2).

8. The accessory for swimming according to any of claims 1 to 7, **characterised in that** the accessory includes a compartment able to hold ballasts in a fixed position.

9. The accessory for swimming according to any of claims 1 to 8, **characterised in that** when the accessory is subjected to a force of a swimmer tending to submerge it gradually while ensuring a horizontal movement, a return force is created by the floater so as to accompany the waviness of the body of the swimmer in his/her horizontal movement.

10. The accessory (80) for swimming according to any of claims 1 to 9, **characterised in that** the vertical plane comprising the centre of gravity of the ballast (3) is substantially identical to the vertical plane comprising the barycentre of the holding means (6), the vertical planes being oriented in the swimming direction.

11. The accessory (80) for swimming according to any of claims 1 to 10, **characterised in that** the vertical axis comprising the centre of gravity of the ballast (3) is substantially identical to the vertical axis comprising the barycentre of the holding means (6).

12. The accessory (80) for swimming according to any of claims 1 to 11, **characterised in that** the vertical axis comprising the barycentre of the holding means (6) is substantially identical to the vertical axis comprising the barycentre of the floater (43).

13. The accessory (80) for swimming according to any of claims 1 to 12, **characterised in that** the holding means are adapted to a two-handed grip, both hands being partly superimposed with each other.

14. The accessory (80) for swimming according to any of claims 1 to 13, **characterised in that** the holding means are adapted to a two-handed grip, both hands being in an arrow position.

15. The accessory (80) for swimming according to any of claims 1 to 14, **characterised in that**:
• the body (3) forms a lower part of the accessory for being submerged upon swimming;
• holding means (6) for holding the accessory adapted to a two-handed grip by a swimmer, both hands being intended to be partly superimposed with each other.

16. The accessory (10, 10', 20, 20', 50, 51) for swimming according to claim 15, **characterised in that** the holding means (6) for holding the accessory are adapted to an arrow hand grip of both hands of a swimmer, a part of the holding means being intended to be positioned between at least two fingers of the swimmer.

17. A system for assistance in swimming comprising an accessory for swimming according to any of claims 1 to 16, **characterised in that** it further comprises a ballast belt enabling the swimmer to maintain the balance position of the accessory when he/she holds it at arm's length.
